# EUROPEAN PATENT SPECIFICATION

(11) **EP 1 286 267 B1**
(45) Date of publication and mention of the grant of the patent: **16.08.2017**
(21) Application number: 01119923.9
(22) Date of filing: 17.08.2001
(51) Int. Cl.: G06F 12/02, G06F 12/08

(54) **Mobile communication device and memory management method**
Mobiles Kommuikationsgerät und Speicherverwaltungsverfahren
Dispositif de communication mobile et procédé de gestion de mémoire

(43) Date of publication of application: 26.02.2003
(73) Proprietor: Sony Deutschland GmbH, 10785 Berlin (DE)
(72) Inventor: Dinescu, Dan, c/o Sony International (Europe) GmbH, 85609 Aschheim-Dornach (DE)
(74) Representative: Körber, Martin Hans

(56) References cited:
- EP-A- 0 834 882
- EP-A- 1 031 929
- DE-U- 29 807 745
- US-A- 5 745 425

## Description

The present invention relates to a mobile communication device and a method of operating such a mobile communication device.

A mobile communication device, e.g. a mobile phone, needs a non-volatile memory to store software and parametric data. Parametric data are for example adjustment data of displays, telephone books and login data of a telephone network carrier. The non-volatile memories do not require power to be supplied to them in order to maintain data. Certain types of non-volatile memories can be erased and occupied with new data without a special-purpose device. The content of the memory can be erased and new data can be stored on the memory device being integrated in the circuit. However, the number of erasing-cycles of these non-volatile memory devices is limited and there is the danger of failure over lifetime of a mobile phone. On the other hand, it is desired to use as little different types of memory devices as possible to save costs and to increase the working speed of the mobile communication device. An intelligent management of storing and erasing data is required.

EP 0 834 882 A2 discloses a memory management method comprising storing parametric data in a volatile memory, such as RAM, and periodically updating the data stored in the RAM to a non-volatile memory such as a Flash Memory. Updating data to the Flash Memory is dependent on the time since the last update or on the importance of the data in the RAM. The parametric data is stored in dependence on the nature of the data, for reducing wear of the non-volatile memory. The method is, e.g. applied to a mobile phone and the information of the data may relate to the user interface set-up, the user personal telephone directory, or some other parameters of the radiotelephone, that vary during use.

In a second realization EP 0 834 882 discloses a method of managing a memory device, wherein data is distinguished in data of different priority levels and the period of storing the data in the non-volatile memory is dependent on the priority level. Data is stored into the non-volatile memory in a linked list.

A disadvantage of the methods described above is that there are no arrangements to ensure a data recovery in case of an unexpected power failure. A further disadvantage is that the linked list always stores the complete set of information. The consumption of storage space is relatively great and an erasing of storage space is often required. This increases the wear of a non-volatile memory, notably a FLASH memory.

DE 197 40 525 C1 discloses a method that relates to the data management in a vehicle. The vehicle comprises a computer with a RAM memory and a FLASH memory. At deactivation of the vehicle and thereby of the data management system, data is stored into the FLASH-memory. Upon restoring the power supply, the data, which had to be maintained, is read out from the non-volatile memory and stored into the volatile memory. Data storing in the non-volatile memory is organized by a circulating storing method. The data is repeatedly stored and only one set of data is actual. At the start in a first phase, default values are transferred into non-volatile memory to quickly ensure the ability of the vehicle to work. In a second phase, the newest set of data is read out from the non-volatile memory and the default values are overwritten with that.

Disadvantageously the disclosed method cannot be protected against data loss in case of an unexpected failure of power supply, without the possibility to execute a special "going down" method. In general, the method is not set to ensure the maintenance of security sensitive data as login data of a telephone network carrier.

The present invention aims to avoid a third type of memory in a mobile communication device and to enable the use of a non-volatile memory with a limited number of erasing cycles in a mobile communication device for maintaining data records, which change during usage of a mobile communication device, whereby an acceptable lifetime of the mobile communication device without a lifetime failure has to be ensured.

The above object is achieved by a mobile communication device according to claim 1 and a memory managing method according to claim 12.

The mobile communication device of the present invention has the advantage to avoid a third type of a non-volatile memory while guaranteeing secure storage of data and preventing lifetime failure of the mobile communication device within an acceptable period of time. The number of erasing procedures is limited by the period of time until the next storing. Considering the expected lifetime of a mobile communication device the period can be determined so that the number of erasing procedures does not wear the non-volatile memory by more then the maximum possible erasing cycles. The sequence counter always gives the newest data set. After power on, the control means can discover the actual data set. In case there was no change in data being stored in the volatile memory, this data will not be flushed. This feature additionally reduces the wear of the non-volatile memory. This arrangement avoids the need of a third type of memory. Normally there is one volatile memory like a RAM and two kinds of non-volatile memories. The control means distinguish normal data and secure data. The control means immediately store secure data in the non-volatile-memory when said data was changed.

In case of loosing data, the disadvantages and the dangers differ depending on the kind of data. Certain sets of parameters are security sensitive data as login data of the telephone network carrier, for example. The distinction of types of data can specifically reduce the risk of data loss.

In case the mobile communication device is not turned off as provided but a breakdown of power supply occurs, the kind of data, that is most sensitive about data loss, is protected as far as possible.

The control means store secure data, which were changed between periodical flushing, in a heap area of the active sector as a patch of the outdated information in a data area. The patch is containing at least the information about offset, length of the outdated information and the new information itself.

This feature reduces the number of sector erasures, because only the information is stored which is necessary to be maintained at all. The total set of data does not normally require the entire sector. A part of the sector can be built as a heap area. The patches of the sets of the secure data having been changed are stored in the heap area. Also it is not possible to overwrite a small part of a non-volatile memory at a single memory address without having erased at least a relating block of the memory before, it is always possible to store in an area having been remained free up to now. The amount of erasing cycles is lowered, because secure data normally requires less space and a flushing is avoided by storing patches of the outdated secure data.

Further, the control means store data, which are changed while flushing the data of the volatile memory into the non-volatile memory, as a patch of the outdated information in another area of the volatile memory. The patch contains at least information about offset, length of the outdated information and the new information itself. The control means change normal data in the volatile memory after the flushing is completed according to the patch and store a patch of secure data in the heap of the active sector of the non-volatile memory.

Upon the flushing there may occur the problem of data, which are just being flushed into the non-volatile memory, being changed. To obtain consistent data records, the changes of data are not immediately processed but the data sets are stored as patches in a different area of the volatile memory. When the flushing is completed, the patches of normal data are used to overwrite the data in the volatile memory with the correct and updated information. The patches of secure data are copied to the heap area of the then active sector in the non-volatile memory. The offset of the patch is adapted to point to the correct data record. That minimizes the risk to get inconsistent data. Data, which have changed, cannot be mixed with unchanged data and thereon cannot be flushed into the non-volatile memory causing data loss by discrepancies or by not noticeable combinations of new and old information.

Further, the control means initiate an erase procedure over the then inactive sector after flushing the data into the now active sector.

In a preferred embodiment of the invention, the control means check byte by byte if the then inactive sector was actually erased.

Thereby the protection against the false storing of data is improved. The concurrence of a not erased bit and a bit, which should not be set by storage, may cause a wrong information.

In an embodiment optionally the erase procedure can be suspended while performing and can continue. The period of time for periodically flushing and erasing may be at least 15 minutes.

Erasing requires a long time and should be interruptible to execute other processes. The period of not less than 15 minutes implies an estimated lifetime of e.g. at least about 5½ years under normal conditions of use of a mobile phone.

Further, preferably, one bit of the sequence counter is always clear and the sequence counter is of an eight bit type having the first bit always clear. The control means test, whether the sequence counter of the one sector is greater than the sequence counter of the other sector or vice versa by equalizing the one sequence counter to the incremented other sequence counter modulo 128 or vice versa.

There are non-volatile memory types, for example a FLASH-memory, which are cleared in the state of all the bits being set. By incrementing a sequence counter may become the value "FF" equal to an erased address. The described feature prevents from that.

In a preferred embodiment, the control means store in the new active sector a check sum computed over the sequence counter and over four identification bytes of the active sector after flushing. The control means test the validity of the active sector by the check-sum and in case of failure uses the other sector as an active sector. The control means can use default values copied to the volatile-memory in case of the second sector being invalid, too.

A power supply failure could occur while flushing or erasing. The embodiment of the invention always ensures a valid data record, either stored in an active sector or given by default values.

In case of switching on the mobile communication device after power off, said control means copy the information of the data in the active sector into the volatile memory.

This embodiment facilitates a fast read/write access to the data, because all the time since power on there is a copy of the data in the volatile memory. The time of accessing to the volatile memory is short in proportion to that of the non-volatile memory.

Preferably the non-volatile memory is a FLASH-type one and the control means display a message in case of three or more failed attempts to erase a sector.

This feature gives notice to a user of the mobile communication device that the device needs service. The memory failure is a defect not expected or noticeable by the user. On that score a message is advantageous.

A preferred application of the invention comprises a mobile communication device with a FLASH-memory as the non-volatile memory.

The method fundamentally has the same advantages as the mobile communication device. Furthermore, a realization of the method is often simple, because no or less modifications of hardware are required. There are remarkable numbers of mobile phone types with a FLASH memory as the only non-volatile memory. The method can ameliorate the management of safe storing of data in an easy way. Advantageously, the inventive method is realized in a software program being able to perform the method steps when stored in a memory of a mobile communication device.

Further, at the inventive memory managing method normal data and secure data are distinguished by the control means and furthermore said secure data is stored in the non-volatile memory by the control means immediately in case of being changed. The method furthermore comprises the step of storing secure data being changed between periodical flushing into a heap area of the active sector as a patch of the outdated information in a data area by the control means, wherein at least information about an off-set, a length of the outdated information and the new information itself is contained.

Data being changed while flushing the data of the volatile memory into the non-volatile memory, is stored as a patch of the outdated information into another area of the volatile memory by the control means, said patch containing at least information about an off-set, length of the outdated information and the new information itself. Said data being normal data is changed in the volatile memory according to the patch after flushing having been completed. A patch of the secure data is stored in the heap of the active sector of the non-volatile memory after flushing having been completed.

Preferably, the then inactive sector is checked by the control means byte by byte if it is actually erased.

Favorably the erase procedure is suspended by the control-circuit, when another software-procedure has to be executed and the continuation of the erasure procedure is initiated by the control unit after the software-procedure has been completed.

Data may be flushed and the inactive sector may be erased by the control means at a minimum period of 15 minutes.

Suitably the sequence counter is of an 8 bit type having one bit always clear and it is tested by the control means, whether the sequence counter of one sector is greater than the sequence counter of the other sector or vice versa by equalizing the one sequence counter to the incremented other sequence counter modulo-128 and vice versa.

A check sum computed over the sequence counter and over four identification bytes of the new active sector can be stored in the new active sector by the control means. While proceeding a "switch on" starting procedure, the validity of the active sector is tested by the control means making use of the check-sum and in case of an invalid active sector, the other sector is used as an active sector. In case of the other sector being invalid, too, default values are copied to the volatile memory by the control means.

After switching on the mobile communication device the information of the data in the active sector patched by the heap-information is copied into the volatile memory.

The methods described above are suitably used with a FLASH-memory as the non-volatile memory and a message is displayed in case of three or more failed attempts to erase a sector.

A preferred embodiment in accordance with the present invention will now be described with references to the accompanying drawings in which:
- Fig. 1: shows a block diagram of a microcontroller in a mobile phone,
- Fig. 2: schematically shows the volatile memory map and the FLASH-memory map of an inventive mobile phone,
- Fig. 3: schematically shows a cutout of the FLASH-memory map containing information labeled as signature in Fig. 1,
- Fig. 4: schematically shows an information unit stored in the FLASH-memory in Fig. 2 at the area labeled as heap,
- Fig. 5: shows a flow chart for a routine, useable for storing and flushing in accordance with the inventive method,
- Fig. 6: shows a flow chart for a routine, which runs if data has been changed just now,
- Fig. 7: shows a flow chart for a subroutine of the flow chart in Fig. 5, useable for flushing, and
- Fig. 8: shows a flow chart for a subroutine of the flow chart in Fig. 5, useable for a power-on process.

A preferred embodiment of the present invention will be described with reference to the accompanying drawings.

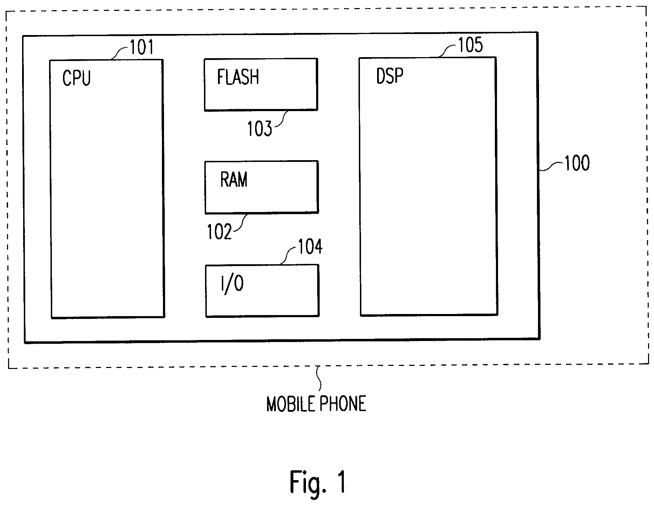

Fig. 1 shows a block diagram of a mobile phone as an example of a mobile communication device with control means 100 having a multiplicity of integrated on-board operating units. The control means 100 comprise a central processing unit (CPU) 101, a random access memory (RAM) 102, a FASH-memory 103, input/output drivers 104, and a digital signal processor (DSP) 105, which is a sophisticated functional unit, e.g. to compute voice coding. The FLASH-memory 103 provides non-volatile memory means and also replaces EEPROM type memory means in the present embodiment of the invention, which will be explained in detail further below. A second type of memory is typically used on board of the microcontroller as the control means 100. That memory is the RAM 102 providing a volatile memory means for use in association with any software running in the microcontroller and itself being stored in the RAM 102 or storing data in the RAM 102. The input/output drivers 104 handle transfer of data between the units of the control means 100 and devices of the mobile phones as microphone, loudspeaker, and receiver/antenna. The CPU 101 is coordinating all the operating units described above and interacting with these.

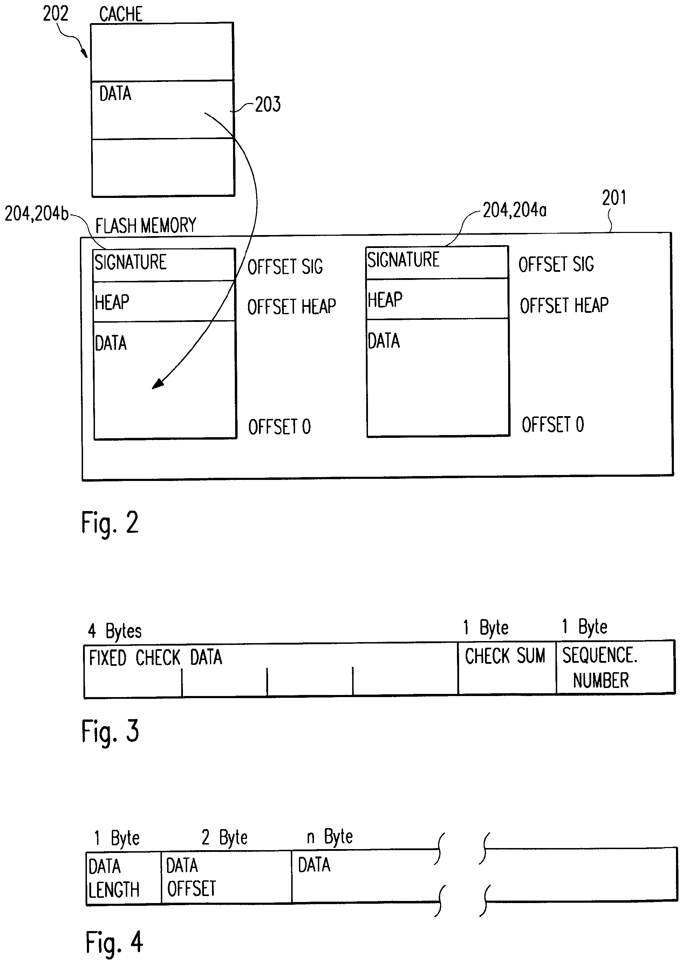

Fig. 2 is a view on a schematic map of a volatile memory 202, for example the FLASH-memory 103 of Fig. 1, and of a volatile memory 202 consisting of the RAM 102 of Fig. 1, e.g. A mobile phone as a specific type of a mobile communication device uses both memories 201,202 in its control means 100. The view presents the logical arrangement of the memories 201,202. The separated numbers of addressable storage units, which are allocated to a logical unit, are clarified by a rectangle for each logical unit. The volatile memory 202 contains a data area 203. In this data area 203 a complete set of data is stored containing the information about normal data and secure data. Normal data in general are all data, which can change according to settings of a user or a radio network carrier. Secure data are settings, which can change and are of importance for a faultless operating of the mobile phone. Such data are adjustment data and parameters, such as login or network protocol information. The complete set is copied from the non-volatile memory 201 into the volatile memory 202, when the power supply is switched on and the mobile phone is used. As a result, the information is always available in the volatile memory 202 and therefore it is possible to read it quickly. The two sectors 204, 204a, 204b do not necessarily require the total storage space of the non-volatile memory 201. Other blocks may contain the working or operating software of the mobile phone, which is not changing besides in case of a software update.

The FLASH-memory 103 is parted in at least two sectors 204. The physical design of a FLASH-memory 103 is composed of blocks of memory addresses of the same number. One or more of these blocks are bunched together to a sector 204 and called correspondingly in the context of the present invention. The concrete implementation uses a single block of 8KB for each sector 204. One of the sectors 204 is marked as an active sector. Following and by convention, the sector 204 on the right is the active sector 204a and the other sector on the left is the inactive sector 204b. The roles of the active sector 204a and the inactive sector 204b continuously exchange and the current arrangement relates to a single state of the inventive method. Each sector is logically parted again in three parts. The first part is a signature. The last and third part is a data area, respectively. Between these two parts the second part is arranged as a heap. The composition of the signature will be explained further below with reference to Fig. 3. The data area serves to receive and maintain data, which is flushed from the data area of the volatile memory 202 into the inactive sector 204b. It contains both the normal data and the secure data after flushing in the state they have been in the data area of the volatile memory 202. Addresses of data records are indicated with an offset, which is a relative address, referring to the beginning or the first absolute address of the sector. The numeration is ascending in direction of the end of the sector or with higher absolute addresses.

Fig. 3 schematically shows a cutout of the FLASH-memory 103 map containing information labeled as signature in Fig. 2. The signature consists of fixed check data and a sequence number having a length of one byte and a check sum having a length of one byte. The control means 100, as shown in Fig. 1, compute the check sum over the sequence counter and over four identification bytes of the active sector. After flushing the result is stored in the signature of the then active sector 204a. The active sector 204a is marked with a sequence counter of a greater value, i.e. by the sequence counter of the other sector incremented with a value " 1".

Fig. 4 schematically shows an information unit stored in the FLASH-memory 103, 201 in Fig. 2 at the area, which is labeled as heap. The information unit is a patch used to store the change of secure data immediately without flushing all the content of the data from the volatile memory 202 into the non-volatile memory 201. The patch consists of a data length information having a length of one byte. Said byte is followed by two bytes comprising the data offset and as a third essential part of the patch by the changes of the data themselves. The main part of the patch consists of this data area in general. The omissions of the rectangle indicate the normally larger quantity of the data in the data area in relation to the three bytes.

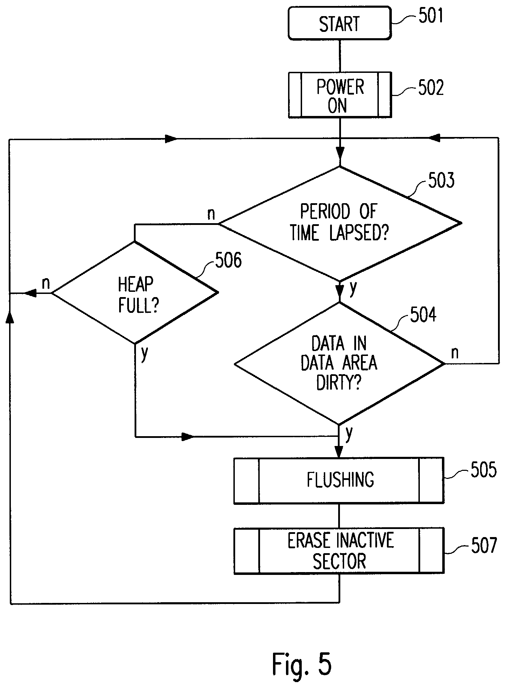

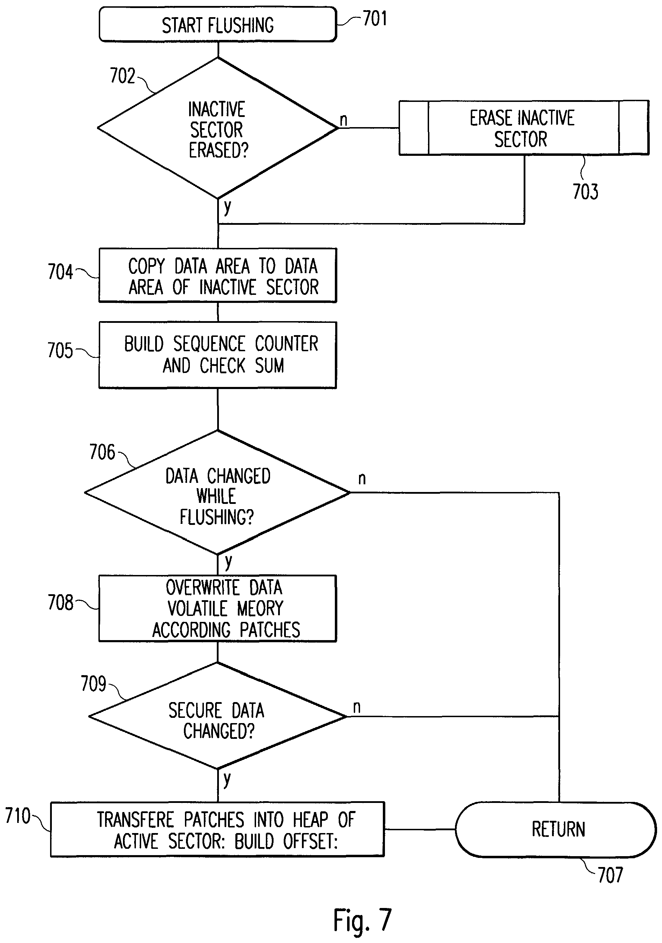

The control means 100 flush the data area 203 of the volatile memory 202, when the period of time is lapsing and an erasing subroutine has already erased the inactive sector 204b. The control means 100 copy the data from the data area 203 of the volatile memory 202 into the data area of the inactive sector 204b. This shows the arrow 205, symbolizing the movement of copied data. In a second step, the control means 100 increment the sequence counter of the active sector by the value "1", except if it would then become a "FF", a byte with all bits set. In this case the sequence counter is set to the value "00". Furthermore, the control means 100 compute a check sum over the new sequence counter value and over four identification bytes of the sector. When the sequence counter is now greater than the sequence counter of the up to now active sector 204a and the check sum indicates that the procedure of flushing is completed, the up to now active sector 4a and the inactive sector 204b exchange their roles. An erasing procedure can run over the up to now active sector 204a, as the new inactive sector. With reference to Fig. 5 a program flow will be explained, which is running at all the time a mobile communication device is operating and which realizes the inventive method in a mobile phone. The routine controls the flushing. In a first step after a start 501, that is reached during a power-on of the mobile phone as an example of a mobile communication device, a subroutine "power on" 502 is called. The subroutine "power on" 502 will be explained in more detail with reference to Fig. 7 further below. The routine itself, furthermore by convention named "main routine" is a part of the software of the mobile phone. The main routine enters its state "start" 501 at any time upon activation of the mobile phone, when the software calls the main function. After the subroutine "power on" 502 is completed there is a complete set of data in the data area 203 of the volatile memory 202. The control means 100 and especially the software of the mobile phone can quickly access the data. The main routine now enters a step 503, which is a decision whether the preset period of time lapsed. The period is set to e.g 15. minutes. In case of "no" (period of time not yet lapsed) the process reaches a further decision step "heap full?" 506. Unless the heap is full the process returns to the decision 503 until the result is "yes" (period of time has lapsed). Alternatively the process proceeds to the predefined process "flushing" 505 as a subroutine. which will be explained with reference to Fig. 7 in more detail further below. This ring forms a wait modus to ensure a flushing not earlier than after e.g. 15 minutes and the main routine is at least active in the wait modus, when the mobile phone is powered on. That means the routine is periodically activated by an interrupt for example and then the routine executes the decision 503 and the ring as long as a time scheduling of the control means 100 or an overflow of the heap stops the execution. In case of "yes" at the decision 503 the process flow enters a further decision step "data dirty?" 504. When no data changed in the data area 203 of volatile memory 202, a new period of time starts and the process flow returns to the wait modus and the decision 503 without doing anything else, because the data at the data area 203 and in the active sector 204a are identical to each other. In case the data have been changed, the decision "data dirty" results in "yes" and the predefined process step "flushing" 505 is called as a subroutine. When the process step "flushing" 505 is completed the main routine proceeds to a predefined process step 703 "erase inactive sector" and finally returns into the wait modus and to the decision step 503.

This implementation of the invention advantageously improves the security against lifetime failure of the mobile phone and at same time the security against data loss. A period of about 15 minutes results in lifetime of about five and a half years. The length of the period, however, can be set different depending on the specific application and/or the particular device.

Furthermore, there is an exit-procedure, which is not shown. This procedure secures a data flushing during an intended power going down of the mobile phone. In case of data in the volatile memory 202 being dirty and the period of time not having lapsed, the exit-procedure flushes data in the non volatile 201 memory .

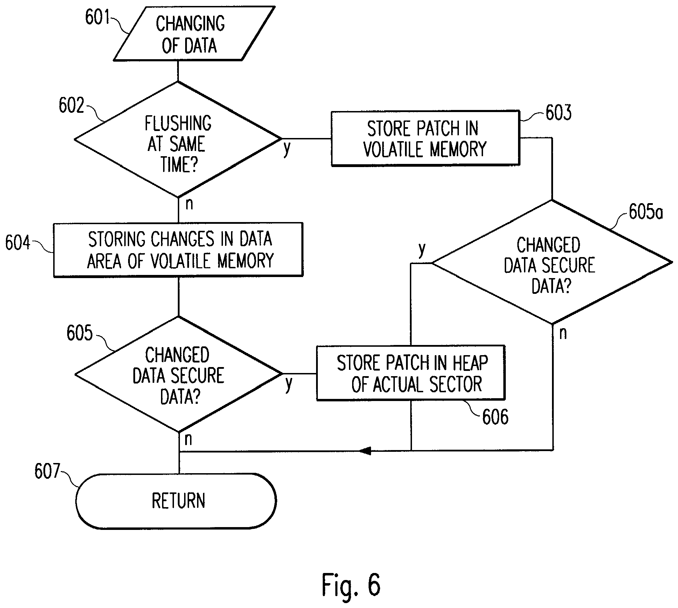

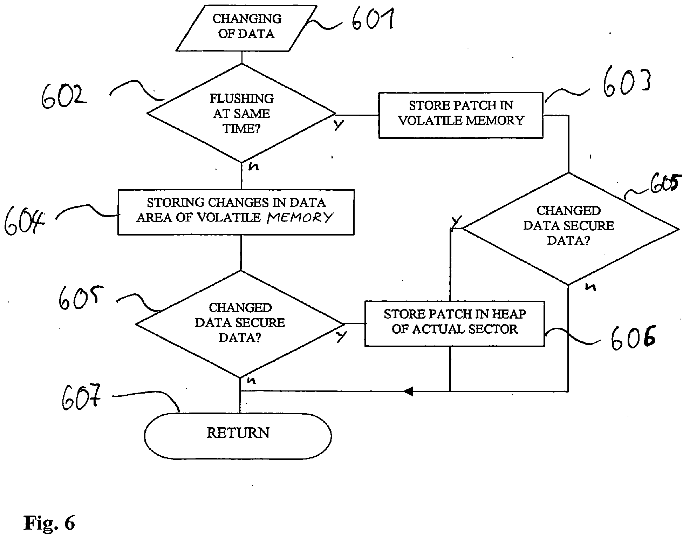

With reference to Fig. 6 a flow chart for a routine will be explained, which runs if data have just been changed. As an external event, for example phone book entries by an user or settings of a network carrier, data are changed, which can be normal or secure data. In this case the process flow enters the state data input "changing of data" 601. When data are changed other software e.g. calls the main process as a subroutine. In the decision "flushing at same time" 602 the process flow differs dependent on whether a subroutine "flushing" 505 called by the main process is running at the same time. This is necessary to avoid the storing of wrong data or mixed data. The main process, which is activated by an interrupt and determines the lapse of the period, and the current process can concur. More in detail, the subroutine "flushing" 505 can run, if activated by the main process. Due to time scheduling the process "flushing" can get a data record, partly changed over again by the current process. From that fact the decision 602 leads to the action "store patch in volatile memory" 603 in case of "yes". A patch equal to the patch explained above is stored in another area of the volatile memory. It contains information about the offset, the data length, and the changed data itself. The main process subsequently can determine the addresses of data in the data area 3 of the volatile memory 202, which are not up to date yet again, by the offset. After storing the patch in RAM and, if secure data, in the heap of the actual sector, the current process enters a step "return" 607 in a direct way and is terminated. In a step "changed data secure data" 605a is tested whether the data needs an immediate storing in the non-volatile memory 201. In case of "no" as result of the previous decision 602 the action 604 occurs "storing changes in data area". The changed data overwrites the data in the data area 3 of the volatile memory 202. In the next step the process flow gets to the decision "changed data secure data" 605 where it is tested whether the changed data are secure data, i.e. if the data need an immediate storing in the non-volatile memory 201. In case of "yes", the action executes "store patch in heap of active sector" 606. The changes of the secure data are stored into patches as described above. The patches are written to the heap area of the non-volatile memory 201. If there is no space in an embodiment of the invention it is possible to provide an extraordinary flushing. In the following step the process flow of the process reaches the step "return" 607 and is terminated. Normal data are stored into the non volatile memory 201 by the main process after the period of time lapsed.

With reference to Fig. 7 the predefined process "flushing", which is called as part of the main process in step 505, will be explained. The figure shows a flow chart for the subroutine. The subroutine process is activated with its start step 701, when called by the main process of Fig. 4. The first step is a decision 702, whether the at the moment inactive sector is already erased. A FLASH-memory 103 as an example for a used non-volatile memory 201 is erased, when all bits are set to the value "high". If a bit is not set by a write action and is still set to the value "low", by other words, the bit is not erased, a data write mistake occurs. To protect against that, the decision 702 tests, whether an erasing process is already completed. In case of "no" a predefined process 703 "erase inactive sector" is called. The flow chart of the process 703 is not shown. It is essential that the erasing process checks bit by bit that the memory addresses are actually erased before itself returns to the main process of Fig. 5. If the inactive sector is surely erased, the "flushing" process proceeds to a step, formed by an action 704 "copy data area to data area of the inactive sector". This step follows the action "build sequence counter and check sum" 705. The sequence counter is formed from the sequence counter of the active sector 204a, which is incremented. In case it would become the value "FF", the count starts with the value "0" again. The check sum is computed over the new sequence counter and four predefined bytes and is stored into the signature of the sector 204b as shown in Fig. 2.

The flushing process now enters the decision "data changed while flushing" 706. As shown in Fig. 6 and explained above with reference to state 602 of Fig. 6, it can occur that data have changed during the flushing process. These changes were stored into patches. The decision tests, whether such patches exist and if the decision results in "no" the flushing process reaches the termination point "return" 707.

In case of "yes" at step 706 an action "overwrite" 708 corrects the data in the data area 203 of the volatile memory 202 by the patches stored in another area of the volatile memory 202. After that, the decision "secure data changed" 709 tests, whether one of the patches relates to secure data. If the decision 709 results in "yes" the action "transfer" 710 starts. It copies the patches of secure data into the heap area of the new active, former inactive sector 4b. The offsets of these patches are adapted to the addresses of corrected data in the data area of the sector 4b of the non-volatile memory 201.

The danger of secure data loss is advantageously eliminated in case of a sudden power supply failure. Secure data is always stored in the actual sector as a patch in the heap.

Fig. 8 shows a flow chart for a subroutine of the flow chart in Fig. 5, useable for flushing. The predefined process is the step 502 of the main process in Fig. 5. The process executes at any time, immediately after power on. The start 801 "power on" is followed by the action 802 "select one sector". The action randomly selects one of the at least two sectors 204 in the non-volatile memory 201. Next, the process enters the decision 803 "sequence counter greater than other". If it results in "no", the sequence counter of the chosen sector 204 is less than that of the other sector 204, the action 804 "select other sector" starts. It exchanges the selection of sectors 204 and the other one becomes the selected sector 204. The process proceeds to a decision 805 "valid check sum?". This decision computes the expected check sum and equalizes its value with the stored check sum of the sector 204. In case that the decision 805 results in "yes", the process reaches action 806 "copy data into volatile memory". A copy of the data in the volatile memory 202 enables the control means 100 of the device to access data quickly. The process now terminates at step 807 "return". In case that the decision 805 results in "no", the process reaches action 808, which exchanges the selection of sectors 204 and the respective other one becomes the selected sector 204. The functionality is equal to the function of step 804. The new selected sector is tested by a decision 809 "valid checksum?", which has an identical functionality with decision 805. If the decision 809 results in "yes" the process proceeds to action 806 and furthermore proceeds as described above. In case of a "no" the process enters an action 810 "copy default data into volatile memory". To ensure under all circumstances the operability of the mobile phone, in case of no valid sector, default values are used. At last the process terminates with step 807.

Advantageously the process makes available the optimal set of data, which can be recovered. The mobile phone can always access the data at the volatile memory 202, when switched on. Since in case of total data loss a limited ability to operate is ensured.

## Claims

1. Mobile communication device comprising volatile memory (202), non-volatile memory (201) and control means (100), whereby at least a part of the non-volatile memory (201) is divided into two sectors (204),
whereby the control means (100) is configured to perform the following steps:
- store data in the volatile memory (202) and periodically flush said data from the volatile memory (202) into the non-volatile memory (201),
- label one of the sectors (204) as an active sector (204a) upon a sequence counter having a greater value than a sequence counter of the other sector (204b), and label the other sector as an inactive sector,
- distinguish normal data and secure data,
- if secure data is changed between said periodical flushing, store said changed secure data (606) as a patch in a heap area of the active sector, containing at least information about off-set, length of outdated information and said changed secure data,
whereby the control means (100) is further configured to periodically (503) perform the following sequence of steps:
if the data in the volatile memory (202) has changed since a last flushing (504),
- check (702) bit by bit that memory addresses of the inactive sector are actually erased,
- erase (703) the inactive sector if the inactive sector was not already erased,
- flush (505,704) a data area of the volatile memory (202) into a data area of the inactive sector, if the control means (100) had already erased the inactive sector, whereby, if data is changed while flushing the data from the data area from the volatile memory (202) into the data area of the non-volatile memory (201), the control means (100) is configured to store said changed data (603) as a patch in another area of the volatile memory (202), containing at least information about off-set, length of outdated information and said changed data, whereby, additionally, if said changed data is secure data, the control means (100) is configured to further store said changed secure data (606) as a patch in a heap area of the active sector, containing at least information about off-set, length of outdated information and said changed secure data,
- increment (705) the sequence counter of the inactive sector in order to exchange roles of the active sector and the inactive sector, the active sector becoming the new inactive sector and the inactive sector becoming the new active sector,
- correct (708) the data area of the volatile memory (202) by the patches of data stored in said another area of the volatile memory (202),
- copy (710) the patches of secure changed data which are stored in the heap area of the new inactive sector into the heap area of the new active sector,
- erase (507) the new inactive sector.

2. Mobile communication device according to claim 1, wherein the control means (100) is further configured to check byte by byte if the inactive sector (204b) was actually erased.

3. Mobile communication device according to claim 1 or 2, wherein the control means (100) is further configured that erasing (703) the inactive sector can be suspended while running and can continue.

4. Mobile communication device according to one of claims 1 to 3, wherein the period of time for periodically flushing and erasing is at a minimum 15 minutes.

5. Mobile communication device according to one of claims 1 to 4, wherein one bit of the sequence counter is always clear.

6. Mobile communication device according to claim 5, wherein the sequence counter is of eight bit type having the first bit always clear and the control means (100) is configured to test whether the sequence counter of the one sector (204) is greater than the sequence counter of the other sector (204) or vice versa by equalizing the one sequence counter to the incremented other sequence counter modulo-128 or vice versa.

7. Mobile communication device according to one of claims 1 or 6, wherein after flushing the control means (100) is configured to store in the new active sector (204a) a check sum computed over the sequence counter and over four identification bytes of the active sector (204a) and in case of switching on the mobile communication device after power off, said control means (100) tests the validity of the active sector (204a) by the check-sum and in case of failure use the other sector (204b) as an active sector.

8. Mobile communication device according to claim 7, wherein the control means (100) is configured to use default values copied to the volatile-memory (202) if the second sector (204) is invalid, too.

9. Mobile communication device according to one of claims 1 to 8, wherein upon start of the device the control means (100) is configured to copy the data from the active sector (204a) into the volatile memory (202).

10. Mobile communication device according to one of claims 1 to 9, wherein the non-volatile memory (201) is a FLASH-type (103) one.

11. Mobile communication device according to one of claims 1 to 10, wherein the control means (100) is configured to display a message in case three or more attempts failing to erase a sector.

12. Memory managing method applied by a mobile communication device with a volatile memory (202), a non-volatile memory (201) and control means (100), whereby at least a part of the non-volatile memory (201) is divided into two sectors (204),
whereby the control means (100) comprises a control circuit and/or a control program, whereby the control circuit and/or the control program is performing the following steps:
- storing, by the control means (100), data in the volatile memory (202) and periodically flushing said data from the volatile memory (202) into the non-volatile memory (201)
- labelling, by the control means (100), one of the sectors (204) as an active sector (204a) upon a sequence counter having a greater value than a sequence counter of the other sector (204b), and labelling, by the control means (100), the other sector as an inactive sector
- distinguishing, by the control means (100), normal data and secure data
- if secure data is changed between said periodical flushing, storing, by the control means (100), said changed secure data (606) as a patch in a heap area of the active sector, containing at least information about off-set, length of outdated information and said changed secure data,
whereby the control circuit and/or the control program further comprises periodically (503) performing the following sequence of steps:
if the data in the volatile memory (202) has changed since a last flushing (504)
- checking (702), by the control means (100), bit by bit that memory addresses of the inactive sector are actually erased
- erasing (703), by the control means (100), the inactive sector if the inactive sector was not already erased
- flushing (505,704), by the control means (100), a data area of the volatile memory (202) into a data area of the inactive sector, if the control means had already erased the inactive sector, whereby, if data is changed while flushing the data from the data area from the volatile memory (202) into the data area of the non-volatile memory (201), storing, by the control means (100), said changed data (603) as a patch in another area of the volatile memory (202), containing at least information about off-set, length of outdated information and said changed data, whereby, additionally, if said changed data is secure data, further storing, by the control means (100), said changed secure data (606) as a patch in a heap area of the active sector, containing at least information about off-set, length of outdated information and said changed secure data,
- incrementing (705), by the control means (100), the sequence counter of the inactive sector in order to exchange roles of the active sector and the inactive sector, the active sector becoming the new inactive sector and the inactive sector becoming the new active sector,
- correcting (708), by the control means (100), the data area of the volatile memory (202) by the patches of data stored in said another area of the volatile memory (202),
- copying (710), by the control means (100), the patches of secure changed data which are stored in the heap area of the new inactive sector into the heap area of the new active sector,
- erasing (507), by the control means (100), the new inactive sector.

13. Memory managing method according to claim 12, wherein the inactive sector (204b) is checked byte by byte whether being actually erased by the control means (100).

14. Memory managing method according to claims 12 or 13, wherein erasing the inactive sector (703) is suspended by the control-circuit, when another software-procedure must run and when the software-procedure has been completed the continuation of the erasure procedure is initiated by the control unit.

15. Memory managing method according to one of claims 12 to 14, wherein at the earliest all 15 minutes the data is flushed and the inactive sector is erased by the control means (100).

16. Memory managing method according to one of claims 12 to 15, wherein one bit of the sequence counter is always clear.

17. Memory managing method according to claim 16, wherein the sequence counter is of eight bit type and it is tested by the control means (100), whether the sequence counter of the one sector (204) is greater than the sequence counter of the other sector (204) or vice versa by equalizing the one sequence counter to the other incremented sequence counter modulo-128 and vice versa.

18. Memory managing method according to one of claims 12 to 17, wherein a check sum is computed over the sequence counter and over four identification bytes of the new active sector (204a) and is stored in the new active sector (204a) by the control means (100) and after switching on the mobile communication device the validity of the active sector (204a) is tested by the control means (100) making use of the check-sum and in case of a invalid active sector (204a) the other sector (204b) is used as an active sector (204a)

19. Memory managing method according to claim 18, wherein default values are copied to the volatile memory (202) by the control means (100) if the other sector (204b) being invalid, too.

20. Memory managing method according to claim 19, wherein the information of the data in the active sector (204a) is copied into the volatile memory (202) by the control means (100).

21. Memory managing method according to one of claims 12 to 20, wherein a FLASH-memory (103) is used as the non-volatile memory (202).

22. Memory managing method according to one of claims 12 to 21, wherein a message is displayed by the control means (100) in case of three or more failed attempts to erase a sector (204).

## Patentansprüche

1. Mobiles Kommunikationsgerät, umfassend einen flüchtigen Speicher (202), einen nichtflüchtigen Speicher (201) und ein Steuermittel (100), wobei zumindest ein Teil des nichtflüchtigen Speichers (201) in zwei Sektoren (204) unterteilt ist,
wobei das Steuermittel (100) konfiguriert ist, um die folgenden Schritte auszuführen:
- Speichern von Daten in dem flüchtigen Speicher (202) und periodisches Leeren der Daten aus dem flüchtigen Speicher (202) in den nichtflüchtigen Speicher (201),
- Markieren eines der Sektoren (204) als aktiven Sektor (204a), sobald ein Folgezähler einen größeren Wert aufweist als ein Folgezähler des anderen Sektors (204b), und Markieren des anderen Sektors als einen inaktiven Sektor,
- Unterscheiden von normalen Daten und sicheren Daten,
- wenn sichere Daten zwischen dem periodischen Leeren geändert werden, Speichern der geänderten sicheren Daten (606) als eine Korrektur in einem Heap-Bereich des aktiven Sektors, der zumindest Informationen über Versatz, Länge der veralteten Informationen und die geänderten sicheren Daten enthält,
wobei das Steuermittel (100) ferner konfiguriert ist, um periodisch (503) die folgende Abfolge von Schritten durchzuführen:
wenn sich die Daten in dem flüchtigen Speicher (202) seit einem letzten Leeren (504) geändert haben,
- Überprüfen (702), Bit für Bit, dass Speicheradressen des inaktiven Sektors tatsächlich gelöscht werden,
- Löschen (703) des inaktiven Sektors, wenn der inaktive Sektor nicht bereits gelöscht wurde,
- Leeren (505,704) eines Datenbereichs des flüchtigen Speichers (202) in einen Datenbereich des inaktiven Sektors, wenn das Steuermittel (100) den inaktiven Sektor bereits gelöscht hatte,
wobei, wenn Daten während des Leerens der Daten aus dem Datenbereich aus dem flüchtigen Speicher (202) in den Datenbereich des nichtflüchtigen Speichers (201) geändert werden, das Steuermittel (100) konfiguriert ist, um die geänderten Daten (603) als eine Korrektur in einem anderen Bereich des flüchtigen Speichers (202) zu speichern, der zumindest Informationen über Versatz, Länge der veralteten Informationen und die geänderten Daten enthält, wobei zusätzlich, wenn die geänderten Daten sichere Daten sind, das Steuermittel (100) konfiguriert ist, um die
geänderten sicheren Daten (606) ferner als eine Korrektur in einem Heap-Bereich des aktiven Sektors zu speichern, der zumindest Informationen über Versatz, Länge der veralteten Informationen und die geänderten sicheren Daten enthält,
- Erhöhen (705) des Folgezählers des inaktiven Sektors, um die Rollen des aktiven Sektors und des inaktiven Sektors zu tauschen, wobei der aktive Sektor der neue inaktive Sektor wird und der inaktive Sektor der neue aktive Sektor wird,
- Korrigieren (708) des Datenbereichs des flüchtigen Speichers (202) durch die in dem anderen Bereich des flüchtigen Speichers (202) gespeicherten Datenkorrekturen,
- Kopieren (710) der Korrekturen der sicheren geänderten Daten, die in dem Heap-Bereich des neuen inaktiven Sektors gespeichert sind, in den Heap-Bereich des neuen aktiven Sektors,
- Löschen (507) des neuen inaktiven Sektors.

2. Mobiles Kommunikationsgerät nach Anspruch 1, wobei das Steuermittel (100) ferner konfiguriert ist, um Byte für Byte zu überprüfen, ob der inaktive Sektor (204b) tatsächlich gelöscht wurde.

3. Mobiles Kommunikationsgerät nach Anspruch 1 oder 2, wobei das Steuermittel (100) ferner konfiguriert ist, sodass das Löschen (703) des inaktiven Sektors während der Durchführung unterbrochen und fortgesetzt werden kann.

4. Mobiles Kommunikationsgerät nach einem der Ansprüche 1 bis 3, wobei die Zeitspanne zum periodischen Leeren und Löschen mindestens 15 Minuten beträgt.

5. Mobiles Kommunikationsgerät nach einem der Ansprüche 1 bis 4, wobei ein Bit des Folgezählers immer frei ist.

6. Mobiles Kommunikationsgerät nach Anspruch 5, wobei der Folgezähler ein 8-Bit-Typ ist, wobei das erste Bit immer frei ist und das Steuermittel (100) konfiguriert ist, um zu testen, ob der Folgezähler des einen Sektors (204) größer als der Folgezähler des anderen Sektors (204) ist oder umgekehrt, indem der eine Folgezähler mit dem erhöhten anderen Modulo-128-Folgezähler gleichgesetzt wird oder umgekehrt.

7. Mobiles Kommunikatiönsgerät nach einem der Ansprüche 1 oder 6, wobei das Steuermittel (100) nach dem Leeren konfiguriert ist, um in dem neuen aktiven Sektor (204a) eine Prüfsumme zu speichern, die über den Folgezähler und über vier Identifikationsbytes des aktiven Sektors (204a) berechnet wurde, und im Falle des Einschaltens des mobilen Kommunikationsgeräts nach einem Abschalten das Steuermittel (100) die Gültigkeit des aktiven Sektors (204a) anhand der Prüfsumme prüft und im Falle eines Fehlers den anderen Sektor (204b) als einen aktiven Sektor verwendet.

8. Mobiles Kommunikationsgerät nach Anspruch 7, wobei das Steuermittel (100) konfiguriert ist, um Standardwerte zu verwenden, die in den flüchtigen Speicher (202) kopiert wurden, falls auch der zweite Sektor (204) ungültig ist.

9. Mobiles Kommunikationsgerät nach einem der Ansprüche 1 bis 8, wobei das Steuermittel (100) nach dem Start des Geräts konfiguriert ist, um die Daten aus dem aktiven Sektor (204a) in den flüchtigen Speicher (202) zu kopieren.

10. Mobiles Kommunikationsgerät nach einem der Ansprüche 1 bis 9, wobei der nichtflüchtige Speicher (201) ein Speicher eines FLASH-Typs (103) ist.

11. Mobiles Kommunikationsgerät nach einem der Ansprüche 1 bis 10, wobei das Steuermittel (100) konfiguriert ist, um eine Nachricht im Falle von drei oder mehr fehlgeschlagenen Versuchen des Löschens eines Sektors anzuzeigen.

12. Speicherverwaltungsverfahren, angewendet durch ein mobiles Kommunikationsgerät mit einem flüchtigen Speicher (202), einem nichtflüchtigen Speicher (201) und einem Steuermittel (100), wobei zumindest ein Teil des nichtflüchtigen Speichers (201) in zwei Sektoren (204) unterteilt ist,
wobei das Steuermittel (100) eine Steuerschaltung und/oder ein Steuerprogramm umfasst, wobei die Steuerschaltung und/oder das Steuerprogramm die folgenden Schritte durchführt:
- Speichern, durch das Steuermittel (100), von Daten in dem flüchtigen Speicher (202) und periodisches Leeren der Daten aus dem flüchtigen Speicher (202) in den nichtflüchtigen Speicher (201)
- Markieren, durch das Steuermittel (100), eines der Sektoren (204) als aktiven Sektor (204a),
sobald ein Folgezähler einen größeren Wert aufweist als ein Folgezähler des anderen Sektors (204b), und Markieren, durch das Steuermittel (100), des anderen Sektors als einen inaktiven Sektor
- Unterscheiden, durch das Steuermittel (100), von normalen Daten und sicheren Daten
- wenn sichere Daten zwischen dem periodischen Leeren geändert werden, Speichern, durch das Steuermittel (100), der geänderten sicheren Daten (606) als eine Korrektur in einem Heap-Bereich des aktiven Sektors, der zumindest Informationen über Versatz, Länge der veralteten Informationen und die geänderten sicheren Daten enthält, wobei die Steuerschaltung und/oder das Steuerprogramm ferner periodisch (503) die folgende Abfolge von Schritten durchführt:
wenn sich die Daten im flüchtigen Speicher (202) seit einem letzten Leeren (504) geändert haben,
- Überprüfen (702), durch das Steuermittel (100), Bit für Bit, dass Speicheradressen des inaktiven Sektors tatsächlich gelöscht werden
- Löschen (703), durch das Steuermittel (100), des inaktiven Sektors, wenn der inaktive Sektor nicht bereits gelöscht wurde
- Leeren (505,704), durch das Steuermittel (100), eines Datenbereichs des flüchtigen Speichers (202) in einen Datenbereich des inaktiven Sektors, wenn das Steuermittel den inaktiven Sektor bereits gelöscht hatte, wobei, wenn Daten während des Leerens der Daten aus dem Datenbereich aus dem flüchtigen Speicher (202) in den Datenbereich des nichtflüchtigen Speichers (201) geändert werden, Speichern, durch das Steuermittel (100), der geänderten Daten (603) als eine Korrektur in einem anderen Bereich des flüchtigen Speichers (202), der zumindest Informationen über Versatz, Länge der veralteten Informationen und die geänderten Daten enthält, erfolgt, wobei zusätzlich, wenn die geänderten Daten sichere Daten sind, ferner
Speichern, durch das Steuermittel (100), der geänderten sicheren Daten (606) als eine Korrektur in einem Heap-Bereich des aktiven Sektors erfolgt, der zumindest Informationen über Versatz, Länge der veralteten Informationen und die geänderten sicheren Daten enthält,
- Erhöhen (705), durch das Steuermittel (100), des Folgezählers des inaktiven Sektors, um die Rollen des aktiven Sektors und des inaktiven Sektors zu tauschen, wobei der aktive Sektor der neue inaktive Sektor wird und der inaktive Sektor der neue aktive Sektor wird,
- Korrigieren (708), durch das Steuermittel (100), des Datenbereichs des flüchtigen Speichers (202) durch die in dem anderen Bereich des flüchtigen Speichers (202) gespeicherten Datenkorrekturen,
- Kopieren (710), durch das Steuermittel (100), der Korrekturen der sicheren geänderten Daten, die in dem Heap-Bereich des neuen inaktiven Sektors gespeichert sind, in den Heap-Bereich des neuen aktiven Sektors,
- Löschen (507), durch das Steuermittel (100), des neuen inaktiven Sektors.

13. Speicherverwaltungsverfahren nach Anspruch 12, wobei der inaktive Sektor (204b) Byte für Byte überprüft wird, ob tatsächlich eine Löschung durch das Steuermittel (100) erfolgt.

14. Speicherverwaltungsverfahren nach Anspruch 12 oder 13, wobei das Löschen des inaktiven Sektors (703) durch die Steuerschaltung unterbrochen wird, wenn eine andere Softwareprozedur ausgeführt werden muss, und nach Beenden der Softwareprozedur das Fortsetzen des Löschvorgangs durch die Steuereinheit eingeleitet wird.

15. Speicherverwaltungsverfahren nach einem der Ansprüche 12 bis 14, wobei frühestens alle 15 Minuten die Daten geleert werden und der inaktive Sektor durch das Steuermittel (100) gelöscht wird.

16. Speicherverwaltungsverfahren nach einem der Ansprüche 12 bis 15, wobei ein Bit des Folgezählers immer frei ist.

17. Speicherverwaltungsverfahren nach Anspruch 16, wobei der Folgezähler ein 8-Bit-Typ ist und durch das Steuermittel (100) getestet wird, ob der Folgezähler des einen Sektors (204) größer als der Folgezähler des anderen Sektors (204) ist oder umgekehrt, indem der eine Folgezähler mit dem anderen erhöhten Modulo-128-Folgezähler gleichgesetzt wird oder umgekehrt.

18. Speicherverwaltungsverfahren nach einem der Ansprüche 12 bis 17, wobei eine Prüfsumme über den Folgezähler und über vier Identifikationsbytes des neuen aktiven Sektors (204a) berechnet wird und in dem neuen aktiven Sektor (204a) durch das Steuermittel (100) gespeichert wird, und nach dem Einschalten des mobilen Kommunikationsgeräts die Gültigkeit des aktiven Sektors (204a) durch das Steuermittel (100) unter Verwendung der Prüfsumme überprüft wird und im Falle eines ungültigen aktiven Sektors (204a) der andere Sektor (204b) als ein aktiver Sektor (204a) verwendet wird.

19. Speicherverwaltungsverfahren nach Anspruch 18, wobei Standardwerte durch das Steuermittel (100) in den flüchtigen Speicher (202) kopiert werden, wenn der andere Sektor (204b) ebenfalls ungültig ist.

20. Speicherverwaltungsverfahren nach Anspruch 19, wobei die Informationen der Daten in dem aktiven Sektor (204a) durch das Steuermittel (100) in den flüchtigen Speicher (202) kopiert werden.

21. Speicherverwaltungsverfahren nach einem der Ansprüche 12 bis 20, wobei ein FLASH-Speicher (103) als der nichtflüchtige Speicher (202) verwendet wird.

22. Speicherverwaltungsverfahren nach einem der Ansprüche 12 bis 21, wobei eine Nachricht von dem Steuermittel (100) im Falle von drei oder mehr fehlgeschlagenen Versuchen des Löschens eines Sektors (204) angezeigt wird.

## Revendications

1. Dispositif de communication mobile comprenant une mémoire volatile (202), une mémoire non volatile (201) et un moyen de commande (100), au moins une partie de la mémoire non volatile (201) étant divisée en deux secteurs (204),
moyennant quoi le moyen de commande (100) est configuré pour effectuer les étapes suivantes :
- stocker des données dans la mémoire volatile (202) et purger périodiquement lesdites données de la mémoire volatile (202) dans la mémoire non volatile (201),
- étiqueter l'un des secteurs (204) en tant que secteur actif (204a) lorsqu'un compteur séquentiel a une valeur supérieure à celle d'un compteur séquentiel de l'autre secteur (204b), et étiqueter l'autre secteur en tant que secteur inactif,
- distinguer les données normales et les données sécurisées,
- si des données sécurisées sont modifiées entre lesdites purges périodiques, stocker lesdites données sécurisées modifiées (606) en tant que correctif dans une zone de tas du secteur actif, contenant au moins des informations sur la longueur de décalage d'informations périmées et lesdites données sécurisées modifiées,
moyennant quoi le moyen de commande (100) est configuré en outre pour effectuer périodiquement (503) la séquence d'étapes suivante :
si les données dans la mémoire volatile (202) ont été modifiées depuis une dernière purge (504),
- vérifier (702) bit par bit que les adresses de mémoire du secteur inactif sont effectivement effacées,
- effacer (703) le secteur inactif si le secteur inactif n'a pas encore été effacé,
- purger (505, 704) une zone de données de la mémoire volatile (202) dans une zone de données du secteur inactif, si le moyen de commande (100) a déjà effacé le secteur inactif,
moyennant quoi, si des données sont modifiées lors de la purge des données de la zone de données de la mémoire volatile (202) dans la zone de données de la mémoire non volatile (201), le moyen de commande (100) est configuré pour stocker lesdites données modifiées (603) en tant que correctif dans une autre zone de la mémoire volatile (202), contenant au moins des informations sur la longueur de décalage d'informations périmées et lesdites données modifiées, moyennant quoi, en outre, si lesdites données modifiées sont des données sécurisées, le moyen de commande (100) est configuré pour stocker en outre lesdites données sécurisées modifiées (606) en tant que correctif dans une zone de tas du secteur actif, contenant au moins des informations sur la longueur de décalage d'informations périmées et lesdites données sécurisées modifiées,
- incrémenter (705) le compteur séquentiel du secteur inactif afin d'échanger les rôles du secteur actif et du secteur inactif, le secteur actif devenant le nouveau secteur inactif et le secteur inactif devenant le nouveau secteur actif,
- corriger (708) la zone de données de la mémoire volatile (202) par les correctifs des données stockées dans ladite autre zone de la mémoire volatile (202),
- copier (710) les correctifs des données sécurisées modifiées qui sont stockées dans la zone de tas du nouveau secteur inactif dans la zone de tas du nouveau secteur actif,
- effacer (507) le nouveau secteur inactif.

2. Dispositif de communication mobile selon la revendication 1, dans lequel le moyen de commande (100) est configuré en outre pour vérifier octet par octet si le secteur inactif (204b) a effectivement été effacé.

3. Dispositif de communication mobile selon la revendication 1 ou 2, dans lequel le moyen de commande (100) est configuré en outre pour que l'effacement (703) du secteur inactif puisse être suspendu en cours d'exécution et puisse se poursuivre.

4. Dispositif de communication mobile selon l'une des revendications 1 à 3, dans lequel la période de temps pour la purge et l'effacement périodiques est d'au moins 15 minutes.

5. Dispositif de communication mobile selon l'une des revendications 1 à 4, dans lequel un bit du compteur séquentiel est toujours mis à zéro.

6. Dispositif de communication mobile selon la revendication 5, dans lequel le compteur séquentiel est de type à huit bits ayant le premier bit toujours mis à zéro, et le moyen de commande (100) est configuré pour tester si le compteur séquentiel d'un secteur (204) est supérieur au compteur séquentiel de l'autre secteur (204), ou vice versa, en égalisant ledit un compteur séquentiel avec l'autre compteur séquentiel incrémenté modulo 128, ou vice versa.

7. Dispositif de communication mobile selon l'une des revendications 1 ou 6, dans lequel, après la purge, le moyen de commande (100) est configuré pour stocker dans le nouveau secteur actif (204a) une somme de contrôle calculée sur le compteur séquentiel et sur quatre octets d'identification du secteur actif (204a), et en cas de mise en marche du dispositif de communication mobile après la mise hors tension, ledit moyen de commande (100) teste la validité du secteur actif (204a) par la somme de contrôle, et en cas d'échec, utilise l'autre secteur (204b) en tant que secteur actif.

8. Dispositif de communication mobile selon la revendication 7, dans lequel le moyen de commande (100) est configuré pour utiliser des valeurs par défaut copiées dans la mémoire volatile (202) si le second secteur (204) est également invalide.

9. Dispositif de communication mobile selon l'une des revendications 1 à 8, dans lequel, lors du démarrage du dispositif, le moyen de commande (100) est configuré pour copier les données du secteur actif (204a) dans la mémoire volatile (202).

10. Dispositif de communication mobile selon l'une des revendications 1 à 9, dans lequel la mémoire non volatile (201) est une mémoire de type FLASH (103).

11. Dispositif de communication mobile selon l'une des revendications 1 à 10, dans lequel le moyen de commande (100) est configuré pour afficher un message au cas où trois tentatives ou plus échouent pour effacer un secteur.

12. Procédé de gestion de mémoire appliqué par un dispositif de communication mobile avec une mémoire volatile (202), une mémoire non volatile (201) et un moyen de commande (100), au moins une partie de la mémoire non volatile (201) étant divisée en deux secteurs (204), le moyen de commande (100) comprenant un circuit de commande et/ou un programme de commande, le circuit de commande et/ou le programme de commande effectuant les étapes suivantes :
- stocker, par le moyen de commande (100), des données dans la mémoire volatile (202), et purger périodiquement lesdites données de la mémoire volatile (202) dans la mémoire non volatile (201),
- étiqueter, par le moyen de commande (100), l'un des secteurs (204) en tant que secteur actif (204a) lorsqu'un, compteur séquentiel a une valeur supérieure à celle d'un compteur séquentiel de l'autre secteur (204b), et étiqueter, par le moyen de commande (100), l'autre secteur en tant que secteur inactif,
- distinguer, par le moyen de commande (100), les données normales et les données sécurisées,
- si des données sécurisées sont modifiées entre lesdites purges périodiques, stocker, par le moyen de commande (100), lesdites données sécurisées modifiées (606) en tant que correctif dans une zone de tas du secteur actif, contenant au moins des informations sur la longueur de décalage d'informations périmées et lesdites données sécurisées modifiées,
moyennant quoi le circuit de commande et/ou le programme de commande comprennent en outre d'effectuer périodiquement (503) la séquence d'étapes suivante :
si les données dans la mémoire volatile (202) ont été modifiées depuis une dernière purge (504),
- vérifier (702), par le moyen de commande (100), bit par bit que les adresses de mémoire du secteur inactif sont effectivement effacées,
- effacer (703), par le moyen de commande (100), le secteur inactif si le secteur inactif n'a pas encore été effacé,
- purger (505, 704), par le moyen de commande (100), une zone de données de la mémoire volatile (202) dans une zone de données du secteur inactif, si le moyen de commande a déjà effacé le secteur inactif, moyennant quoi, si des données sont modifiées pendant la purge des données de la zone de données de la mémoire volatile (202) dans la zone de données de la mémoire non volatile (201), stocker, par le moyen de commande (100), lesdites données modifiées (603) en tant que correctif dans une autre zone de la mémoire volatile (202), contenant au moins des informations sur la longueur de décalage d'informations périmées et lesdites données modifiées, moyennant quoi, en outre, si lesdites données modifiées sont des données sécurisées, stocker en outre, par le moyen de commande (100), lesdites données sécurisées modifiées (606) en tant que correctif dans une zone de tas du secteur actif, contenant au moins des informations sur la longueur de décalage d'informations périmées et lesdites données sécurisées modifiées,
- incrémenter (705), par le moyen de commande (100), le compteur séquentiel du secteur inactif afin d'échanger les rôles du secteur actif et du secteur inactif, le secteur actif devenant le nouveau secteur inactif et le secteur inactif devenant le nouveau secteur actif,
- corriger (708), par le moyen de commande (100), la zone de données de la mémoire volatile (202) par les correctifs des données stockées dans ladite autre zone de la mémoire volatile (202),
- copier (710), par le moyen de commande (100), les correctifs des données sécurisées modifiées qui sont stockées dans la zone de tas du nouveau secteur inactif dans la zone de tas du nouveau secteur actif,
- effacer (507), par le moyen de commande (100), le nouveau secteur inactif.

13. Procédé de gestion de mémoire selon la revendication 12, dans lequel le secteur inactif (204b) est contrôlé octet par octet pour déterminer s'il est effectivement effacé par le moyen de commande (100).

14. Procédé de gestion de mémoire selon la revendication 12 ou 13, dans lequel l'effacement du secteur inactif (703) est suspendu par le circuit de commande, lorsqu'une autre procédure logicielle doit être exécutée, et lorsque la procédure logicielle est terminée, la poursuite de la procédure d'effacement est lancée par l'unité de commande.

15. Procédé de gestion de mémoire selon l'une des revendications 12 à 14, dans lequel au plus tôt toutes les 15 minutes, les données sont purgées et le secteur inactif est effacé par le moyen de commande (100).

16. Procédé de gestion de mémoire selon l'une des revendications 12 à 15, dans lequel un bit du compteur séquentiel est toujours mis à zéro.

17. Procédé de gestion de mémoire selon la revendication 16, dans lequel le compteur séquentiel est de type à huit bits et il est testé, par le moyen de commande (100), si le compteur séquentiel dudit un secteur (204) est supérieur au compteur séquentiel de l'autre secteur (204), ou vice versa, en égalisant ledit un compteur séquentiel avec l'autre compteur séquentiel incrémenté modulo 128, et vice versa.

18. Procédé de gestion de mémoire selon l'une des revendications 12 à 17, dans lequel une somme de contrôle est calculée sur le compteur séquentiel et sur quatre octets d'identification du nouveau secteur actif (204a) et est stockée dans le nouveau secteur actif (204a) par le moyen de commande (100), et après la mise en marche du dispositif de communication mobile, la validité du secteur actif (204a) est testée par le moyen de commande (100) en utilisant la somme de contrôle, et dans le cas d'un secteur actif invalide (204a), l'autre secteur (204b) est utilisé en tant que secteur actif (204a).

19. Procédé de gestion de mémoire selon la revendication 18, dans laquelle des valeurs par défaut sont copiées dans la mémoire volatile (202) par le moyen de commande (100) si l'autre secteur (204b) est également invalide.

20. Procédé de gestion de mémoire selon la revendication 19, dans lequel les informations des données dans le secteur actif (204a) sont copiées dans la mémoire volatile (202) par le moyen de commande (100).

21. Procédé de gestion de mémoire selon l'une des revendications 12 à 20, dans lequel une mémoire FLASH (103) est utilisée en tant que mémoire non volatile (202).

22. Procédé de gestion de mémoire selon l'une des revendications 12 à 21, dans lequel un message est affiché par le moyen de commande (100) dans le cas où trois tentatives, ou plus, d'effacement d'un secteur (204), échouent.
